# EUROPÄISCHE PATENTSCHRIFT

(11) **EP 2 070 681 B1**
(45) Veröffentlichungstag und Bekanntmachung des Hinweises auf die Patenterteilung: **02.03.2011**
(21) Anmeldenummer: 07024065.0
(22) Anmeldetag: 12.12.2007
(51) Int. Cl.: B29C 45/14, B29C 45/16, B29L 31/58, B60R 13/02

(54) **Verfahren und Vorrichtung zur Herstellung von Kunststoff-Formteilen mit unterschiedlichen Dekorbereichen insbesondere für Innenverkleidungen von Kraftfahrzeugen**
Method and device for manufacturing synthetic moulded parts with different decorative areas, in particular for interior panels of motor vehicles
Procédé et dispositif destinés à la fabrication de pièces moulées en matière plastique dotées de zones de décoration différentes, notamment pour l'habillage intérieur de véhicules automobiles

(43) Veröffentlichungstag der Anmeldung: 17.06.2009
(73) Patentinhaber: PEGUFORM GMBH, 79268 Bötzingen (DE)
(72) Erfinder: Schirmer, Hans, 68600 Heitern (FR); Buchet, Yann, 67000 Strassburg (FR)
(74) Vertreter: Neunert, Peter Andreas

(56) Entgegenhaltungen:
- EP-A- 1 655 122
- EP-A- 1 815 964
- WO-A-00/00340
- FR-A- 2 771 045

## Beschreibung

Die vorliegende Erfindung betrifft ein Verfahren sowie eine Vorrichtung zur Herstellung von Kunststoff-Formteilen mit unterschiedlich ausgeführten Dekorbereichen sowie ihre Verwendung als Innenverkleidung für Kraftfahrzeuge, insbesondere Instrumententafeln, Türverkleidungen oder Seitenverkleidungen.

Es ist bekannt, Gewebematerialien, Kunststoff-Folien, Teppichmaterialien oder Leder beziehungsweise Lederimitate, die als Dekor vorgesehen sind oder spezielle technische Funktionen haben sollen, mit formgebendem Kunststoff zu hinterspritzen, indem das Gewebe beziehungsweise die Folie in eine Form eingelegt und flüssiger Kunststoff in die Form eingespritzt wird. In den Fällen, in denen das Formteil mit unterschiedlichen Oberflächenstrukturen versehen werden soll, löst man die Aufgabe in der Regel dadurch, dass zwei Teile quasi als Halbzeug in unterschiedlichen Herstellprozessen vorgefertigt und anschließend miteinander verbunden beziehungsweise verklebt werden. Das Verarbeiten von mehreren Teilen bringt allerdings das Problem mit sich, dass eine Vielzahl unterschiedlicher Verarbeitungsschritte sowie Transportvorgänge für die entsprechenden Halbzeuge koordiniert werden müssen. Nachteilig ist in diesem Fall der zusätzliche Zeitaufwand sowie der hohe fertigungstechnische Aufwand.

Man hat daher versucht, derartige Kunststoff-Formteile mit unterschiedlichen Dekorbereichen in einem einzigen Formwerkzeug herzustellen. So wird in der EP 1 655 122 A1 ein Verfahren zur Herstellung von Kunststoff-Formteilen beschrieben, bei dem in einem ersten Verfahrensschritt ein erstes Gewebe oder eine erste Dekorfolie in einem Formwerkzeug hintergespritzt wird, anschließend ein Teilstück aus dem so hergestellten Halbzeug ausgestanzt wird und dann ein zweites Gewebe oder eine zweite Dekorfolie anstelle des entfernten Teils des Halbzeugs eingelegt wird und das Halbzeug dann an dieser Stelle nochmals hinterspritzt wird. Ein Nachteil dieses Verfahrens ist insbesondere darin zu sehen, dass beim Ausstanzen des zu ersetzenden Bereichs das Formwerkzeug leicht beschädigt werden kann.

In der FR 2771045 A wird ein Verfahren zur Herstellung eines Formteils mit aneinander grenzenden unterschiedlichen Dekorbereichen beschrieben, wobei zunächst eine äußere Dekorfolie in ein Formwerkzeug eingelegt wird, die sämtliche Bereiche der Matrizenoberfläche bedeckt. Anschließend werden in Teilbereichen weitere Dekorfolien hinter der ersten Dekorfolie eingelegt. Nach dem Hinterformen zumindest von Teilbereichen mit thermoplastischem Kunststoff kann dann durch Herausschneiden der oberen Dekorfolie die darunter liegende Dekorfolie freigelegt werden, so dass eine Formteiloberfläche mit unterschiedlichen Dekorbereichen entsteht.

Es bestand somit das Problem, ein Verfahren zu finden, mit dessen Hilfe es gelingt, zu ersetzende Bereiche eines Formteils konturgenau abzutrennen, ohne dabei das Werkzeug zu gefährden.

Gelöst wird diese Aufgabe durch ein Verfahren mit dem Merkmal des Anspruchs 1. Bevorzugte Ausführungsformen und Ausgestaltungen des erfindungsgemäßen Verfahrens sind in den Unteransprüchen 2 bis 11 wiedergegeben. Gelöst wird diese Aufgabe auch durch eine Vorrichtung zur Herstellung von Formteilen mit unterschiedlichen Dekorbereichen mit dem Merkmal des Anspruchs 12. Bevorzugte Ausführungsform und Ausgestaltungen der erfindungsgemäßen Vorrichtung sind in den Unteransprüchen 13 bis 15 wiedergegeben.

Das Erfindungsprinzip basiert darauf, dass der zu ersetzende Bereich des Formteils nicht mehr hinterformt und dann komplett ausgestanzt wird, sondern in einem ersten Spritzgießvorgang zunächst nur die Bereiche hinterspitzt werden, die in dem späteren Kunststoff-Formteil als primäre Dekorbereiche vorgesehen sind, während die Dekorfolie in den Bereichen, die ersetzt werden sollen, nicht mehr hinterformt wird. Um die zu hinterformenden Bereiche und die freibleibenden Bereiche im Werkzeug voneinander zu trennen, sind im Formwerkzeug schmale Stege vorgesehen, durch die bei geschlossenem Formwerkzeug unterschiedliche Kavitäten ausgebildet werden, wobei diese Stege sowohl formgebende als auch abdichtende Aufgaben erfüllen.

Beim erfindungsgemäßen Verfahren wird nun zunächst das gesamte Formwerkzeug mit sämtlichen Kavitäten mit einer ersten Dekorfolie belegt. Das Formwerkzeug selber ist dabei vorzugsweise so gestaltet, dass die Matrize durch schmale Stege unterteilt ist, durch die einzelne Teilkavitäten ausgebildet werden. Da die schmalen Stege zugleich eine abdichtende Funktion haben, kann die Dekorfolie in den einzelnen Teilkavitäten nun unterschiedlich bearbeitet werden. So wird die Dekorfolie im Bereich wenigstens einer durch eine Anordnung schmaler Stege ausgebildeten Kavitäten im Formwerkzeug mit einem Kunststoff hinterformt, während sie in mindestens einer benachbarten Kavität frei bleibt. Der schmale Steg im Formwerkzeug bildet nun die Grenze zwischen dem hinterformten Teilbereich und dem unbehandelten Bereich des Halbzeugs.

Nach diesem ersten Hinterformen wird das Werkzeug wieder geöffnet und das teilweise hinterformte Halbzeug verbleibt in der Matrize und wird in eine Beschnitt-Position gebracht. Dazu wird der hinterformte Teil des Halbzeuges mit Hilfe eines Haltesystems in der Matrize bzw. auf der Werkzeugoberfläche fixiert. Erfindungswesentlich ist nun, dass ein Teil der Matrize oder die gesamte Matrize in dem nicht hinterformten Bereich des Formwerkzeugs als Schieber ausgebildet ist, mit dem die nicht hinterformte Dekorfolie nun aus der Werkzeugoberfläche herausgeschoben und gespannt werden kann.

Erfindungswesentlich ist weiterhin, dass der die jeweiligen Kavitäten trennende Steg kein Bestandteil des Schiebers ist und stets auf dem ursprünglichen Niveau verbleibt, sodass beim Herausschieben des Schiebers aus der Werkzeugoberfläche die nicht hinterformte Dekorfolie zwischen dem auf der Werkzeugoberfläche fixierten Rand des hinterformten Bereichs und dem Rand des Schiebers frei aufgespannt wird. In diesem frei aufgespannten Bereich kann nun die Dekorfolie am Rand des hinterformten Bereichs abgeschnitten und dann aus dem Werkzeug entfernt werden. Nach dem Zurückfahren des Schiebers in die Ebene der Formwerkzeugoberfläche kann der nun freie Bereich der Matrize mit einer unterschiedlichen Dekorfolie belegt und anschließend hinterformt werden. Das Beschneiden der Dekorfolie kann dabei auf mechanische Weise mit Hilfe eines Messers oder mit einem CO₂-Laserstrahl erfolgen.

Das Haltesystem für den hinterformten Bereich besteht aus einem oder mehreren Niederhaltern, die wie eine Art Stempel den hinterformten Bereich des Halbzeuges an dessen Rand auf der Werkzeugoberfläche fixieren. Um die nicht hinterformte Dekorfolie zwischen dem Rand des hinterformten Bereiches und dem Rand des Schiebers schnell und wirkungsvoll zu spannen und dabei ein zu weites Herausschieben des Schiebers aus der Matrizenoberfläche zu vermeiden, ist es vorteilhaft, auch die nicht hinterformte Folie im Bereich des Schiebers selber mit Hilfe eines weiteren Haltesystems zu fixieren, bevor oder während die Folie aus der Matrizenoberfläche herausgeschoben wird. Dazu wird vorteilhaft ein Niederhalter eingesetzt, der der Form des Schiebers so angepasst ist, dass die Dekorfolie im gesamten Randbereich des Schiebers fixiert werden kann.

Auf diese Weise wird erreicht, dass nur ein kleiner Abschnitt der nicht hinterformten Dekorfolie beim Herausschieben aus der Matrizenoberfläche gespannt werden muss und somit der Weg des Schiebers relativ kurz gehalten werden kann.

Das Hinterformen ist vorzugsweise ein Hinterspritzen oder Hinterschäumen, wobei als Trägermaterialien thermoplastische Kunststoffe, wie z. B. Polypropylen (PP), Polyethylen (PE), Polyurethan (PU), Polyamid (PA), Polycarbonat (PC), Acrylnitril-Butadien-Styrol (ABS), Acrylnitril-Butadien-Styrol/Polycarbonat-Copolymerisat (ABS-PC) eingesetzt werden. Dabei können diese Kunststoffe in einer bevorzugten Ausführungsform der Erfindung auch verstärkt sein, wobei als Verstärkungsmaterial Fasern, wie z. B. Glasfasern, Naturfasern oder Carbonfasern, bzw. die sonst üblichen Verstärkungsmaterialien eingesetzt werden. Als Dekorfolien kommen Gewebe, Dekorstoffe, Kunststoff-Folien, Teppichstoffe, Leder und Lederimitate in Frage. Häufig werden Dekorfolien aus Kunststoff eingesetzt, wobei auch hier wieder thermoplastische Kunststoffe wie Polypropylen (PP), Polyethylen (PE), Polyvinylchlorid (PVC) und Polyurethan (PU) bevorzugt werden.

Die im Formwerkzeug auf der Matrizenoberfläche ausgebildeten schmalen Stege besitzen sowohl eine formgebende als auch eine abdichtende Funktion und unterteilen die Gesamtkavität des Werkzeuges in unterschiedliche Teilkavitäten, die dem Konzept für das Formteil entsprechend beim Spritzgießen hinterformt werden bzw. frei bleiben.

Nachdem die Dekorfolie in dem zu hinterformenden ersten Dekorbereich hinterformt ist, wird das Werkzeug geöffnet, sodass sämtliche Teilkavitäten von außen zugänglich sind. Die hinterformten Bereiche werden auf der Werkzeugoberfläche mit dem ersten Haltesystem fixiert, während gleichzeitig oder zeitversetzt auch die nicht hinterformte Dekorfolie mit einem zweiten Haltesystem im Randbereich eines Schiebers, der in die Matrize integriert ist, fixiert wird. Durch das Herausschieben des Schiebers aus der Matrizenoberfläche wird die Dekorfolie zwischen dem hinterformten Bereich und dem Rand des Schiebers frei aufgespannt und kann dann problemlos am Rand des hinterformten Bereiches beschnitten werden, ohne Gefahr zu laufen, das Werkzeug zu beschädigen.

Nach dem Entfernen des Ausschnittes und dem Zurückfahren des Schiebers in die Ebene der Matrizenoberfläche können für die Ausbildung des zweiten Dekorbereiches an dieser Stelle nun zwei unterschiedliche Wege eingeschlagen werden.

Bei einer ersten Variante bleibt dieser Bereich frei und das Dekor wird beim anschließenden Hinterformen dieses Bereiches direkt auf der Oberfläche des Trägermaterials ausgebildet, wobei die Oberfläche des Formwerkzeuges als negative Dekorvorlage dient und beim Spritzgießen auf der Formteiloberfläche abgebildet wird. In diesem Fall kann die Werkzeugoberfläche Nabungen oder andere dekorative Strukturen aufweisen, die dann auf der Trägeroberfläche wiederzufinden sind.

Bei der zweiten Variante wird nach dem Ausschneiden des Teilbereichs an diese Stelle eine zweite Dekorfolie in das Werkzeug eingelegt, die dann wieder mit einem thermoplastischen Kunststoff hinterformt wird.

Natürlich ist es auch möglich, das Formwerkzeug so zu konzipieren, dass mehrere Bereiche aus dem Formteilhalbzeug herausgeschnitten werden und dann beide obengenannten varianten nebeneinander oder auch unterschiedliche Dekorfolien als zweite Dekorfolie eingesetzt werden. Auf diese Weise kann ein Kunststoff-Formteil mit mehreren unterschiedlichen Dekorbereichen ausgebildet werden.

Die Vorrichtung zur Herstellung eines unterschiedliche Dekorbereiche aufweisenden Kunststoff-Formteils umfasst somit ein aus einer Matrize und einem Kern bestehendes Formwerkzeug, wobei auf der Matrize Stege zur Ausbildung und Abdichtung unterschiedlicher Teilkavitäten ausgebildet sind. Zusätzlich umfasst die Vorrichtung ein Haltesystem mit einem oder mehreren Niederhaltern zur Fixierung der hinterformten Bereiche eines in einem ersten Spritzdurchgang gefertigten Halbzeuges auf der Matrizenoberfläche. Gleichzeitig ist mindestens ein Bereich der Matrize einer im ersten Spritzdurchgang nicht ausgeformten Teilkavität als Schieber ausgebildet, mit dessen Hilfe die nicht hinterformte Formhaut aus der Ebene der Matrizenoberfläche herausgeschoben und gespannt werden kann. Kombiniert ist das Formwerkzeug mit einem Schneidwerkzeug, das im Randbereich des bereits hinterformten Dekors eingreift und mit dessen Hilfe die nicht hinterformte Dekorfolie abgetrennt werden kann. Als Schneidwerkzeug können mechanische Schneidwerkzeuge, wie z. B. Messer, oder aber auch Laser eingesetzt werden.

Bei einer bevorzugten Ausgestaltung des Formwerkzeuges ist ein weiteres Haltesystem vorgesehen, das im Bereich des Schiebers eingreift und die nicht hinterformte Dekorfolie noch vor oder mit dem Verschieben am Rand des Schiebers fixiert, sodass zum freien Aufspannen der nicht hinterformten Dekorfolie zwischen dem hinterformten Bereich und dem Rand des Schiebers nur relativ kleine Wege zurückgelegt werden müssen. Damit dieses System funktioniert und ein freies Aufspannen der nicht hinterformten Dekorfolie ermöglicht wird, ist es zwingend erforderlich, dass sich die die einzelnen Teilkavitäten trennenden schmalen Stege stets außerhalb des als Schieber ausgebildeten Teils der Matrize befinden.

Die nach dem erfindungsgemäßen Verfahren in der erfindungsgemäßen Vorrichtung hergestellten Kunststoff-Formteile finden Verwendung insbesondere als Innenverkleidung von Kraftfahrzeugen, wie z. B. als Instrumententafeln, Türverkleidungen oder Seitenverkleidungen.

Im Folgenden wird die Erfindung anhand von Zeichnungen näher erläutert. Dabei zeigen
- Fig. 1: einen Querschnitt eines Ausschnitts eines geöffneten Formwerkzeuges nach dem ersten Spritzdurchgang,
- Fig. 2: den Querschnitt aus Fig. 1 nach der Betätigung des Schiebers und
- Fig. 3: den Querschnitt aus Fig. 1 und 2 beim Beschneiden des Randbereiches.

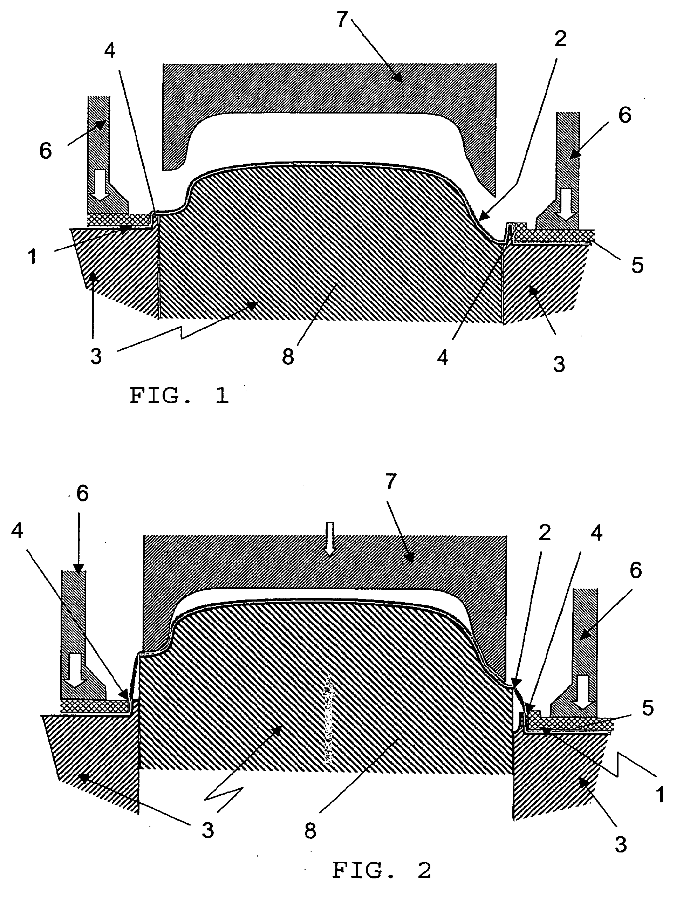

In der Fig. 1 ist ein Ausschnitt aus einem Formwerkzeug zu sehen, das durch schmale Stege 4 voneinander getrennte Teilkavitäten aufweist. Bei dieser Abbildung handelt es sich um eine Momentaufnahme, die den Zeitpunkt nach dem ersten Spritzgießvorgang festhält. Dabei sind die Teilkavitäten für den ersten Dekorbereich bereits mit dem Träger 5 hinterformt und die hinterformten Bereiche sind in ihren Randbereichen mit den Niederhaltern 6 auf der Oberfläche der Matrize 3 fixiert. Der Bereich der Matrize 3 zwischen den beiden Stegen 4 ist als Schieber 8 ausgebildet, der sich zu dem in der Fig. 1 festgehaltenen Zeitpunkt in seiner Ausgangsstellung in der Ebene der Matrizenoberfläche befindet. Die gesamte Oberfläche der Matrize 3 ist mit einer Formhaut 2 belegt, die lediglich im Bereich für das erste Dekor hinterformt ist, während sie in dem mittleren, für das zweite Dekor vorgesehenen Bereich, frei ist. Oberhalb dieses Bereiches ist ein weiterer Niederhalter 7 zu erkennen, der im Gegensatz zu den beiden anderen Niederhaltern 6 noch nicht in den Prozess eingreift. Die Form des Niederhalters 7 ist in seinem Randbereich dem Randbereich des Schiebers 8 angepasst.

In der Fig. 2 ist in der gleichen Darstellungsweise der nächste Verfahrensschritt dargestellt, wobei die Dekorfolie 2 mit dem Niederhalter 7 am Rand des Schiebers 8 fixiert ist. Der Schieber 8 ist bereits aus der Ebene der Matrizenoberfläche herausgeschoben worden, wobei die Dekorfolie 2 frei zwischen dem Rand des Schiebers 8 und dem Rand des hinterformten Bereiches 1 bzw. dem Träger 5 aufgespannt ist.

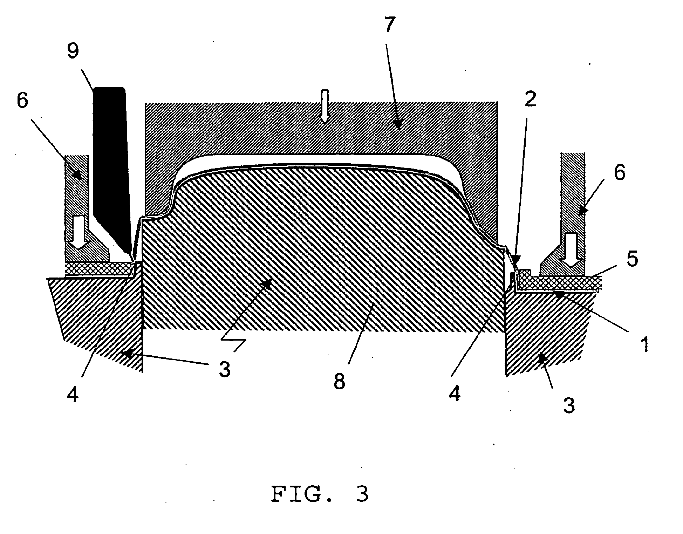

Die Fig. 3 schließlich zeigt den Eingriff des Schneidwerkzeuges 9 im Randbereich des hinterformten Bereichs 1. Da die Dekorfolie in diesem Bereich frei aufgespannt ist, kann sie an dieser Stelle sowohl mit einem mechanischen Werkzeug als auch mit einem Laser problemlos beschnitten werden, ohne dass man Gefahr läuft, die Werkzeugoberfläche zu beschädigen.

### Bezugszeichenliste

- 1: hinterformter Dekorbereich
- 2: Dekorfolie
- 3: Matrize
- 4: schmaler Steg
- 5: Träger
- 6: Niederhalter
- 7: Niederhalter
- 8: Schieber
- 9: Schneidwerkzeug

## Patentansprüche

1. Verfahren zur Herstellung eines Formteils mit unterschiedlichen Dekorbereichen, umfassend die Schritte
a) Einlegen einer ersten Dekorfolie (2) in eine Matrize (3) eines mehrere, durch schmale Stege (4) voneinander getrennte Teilkavitäten aufweisenden, aus einem Kern und einer Matrize (3) aufgebauten Formwerkzeugs;
b) Ausbilden eines ersten Dekorbereiches (1) durch Hinterformen der ersten Dekorfolie (2) im Bereich mindestens einer ersten Teilkavität des Formwerkzeugs mit einem Träger (5) aus thermoplastischen Kunststoff, wobei die Dekorfolie (2) im Bereich mindestens einer weiteren, benachbarten Teilkavität frei bleibt; **gekennzeichnet durch** die Schritte
c) Öffnen des Werkzeugs und Entfernen des mindestens einen nicht hinterformten Teilstücks der Dekorfolie (2) aus dem so hergestellten Halbzeug;
d) Ausbilden eines zweiten Dekorbereichs an der Stelle des mindestens einen entfernten Teilstücks, wobei
im Verfahrensschritt c)
i) das hinterformte Teilstück (1) der ersten Dekorfolie (2) nach dem Öffnen des Werkzeugs mit einem Niederhalter (6) auf der Oberfläche der Matrize (3) fixiert wird,
ii) das nicht hinterformte Teilstück der ersten Dekorfolie (2) mit Hilfe mindestens eines im Bereich der zweiten Kavität zwischen den die Kavität, begrenzenden schmalen Stegen (4) im Bereich der Matrize (3) angeordneten Schiebers (8) aus der Ebene der Matrizenoberfläche herausgeschoben wird, wobei die Dekorfolie (2) in dem zu beschneidenden Bereich zwischen dem fixierten hinterformten ersten Dekorbereich (1) und dem Rand des Schiebers (8) aufgespannt wird, und
iii) die Dekorfolie (2) am Rand des hinterformten ersten Dekorbereichs (1) beschnitten und anschließend aus dem Werkzeug entfernt wird.

2. Verfahren nach einem der Ansprüche 1,
**dadurch gekennzeichnet, dass**
das nicht hinterformte Teilstück der ersten Dekorfolie (2) mit Hilfe eines weiteren Niederhalters (7) zusätzlich im Randbereich des Schiebers (8) fixiert wird.

3. Verfahren nach Anspruch 1 oder 2,
**dadurch gekennzeichnet, dass**
der zweite Dekorbereich durch direkte Abbildung eines Dekors auf der Oberfläche des Trägers (5) durch die Oberfläche des Formwerkzeugs ausgebildet wird.

4. Verfahren nach Anspruch 1 oder 2,
**dadurch gekennzeichnet, dass**
nach dem Entfernen des Teilstücks der ersten Dekorfolie (2) an dessen Stelle eine zweite Dekorfolie eingelegt und anschließend hinterformt wird.

5. Verfahren nach einem der Ansprüche 1 bis 4,
**dadurch gekennzeichnet, dass**
das Hinterformen durch Hinterspritzen oder Hinterschäumen erfolgt.

6. Verfahren nach einem der Ansprüche 1 bis 5,
**dadurch gekennzeichnet, dass**
als Dekorfolie (2) Gewebe, Dekorstoffe, Kunststoff-Folien, Teppichstoffe, Leder und Lederimitate eingesetzt werden.

7. Verfahren nach einem der Ansprüche 1 bis 6,
**dadurch gekennzeichnet, dass**
als thermoplastischer Kunststoff Polypropylen (PP), Polyethylen (PE), Polyurethan (PU), Polyamid (PA), Polycarbonat (PC), Acrylnitril-Butadien-Styrol (ABS) und Acrylnitril-Butadien-Styrol / Polycarbonat Copolymerisat (ABS-PC) eingesetzt wird.

8. Verfahren nach Anspruch 7,
**dadurch gekennzeichnet, dass**
der thermoplastischen Kunststoff mit Fasern, wie z. B. Glasfasern, Naturfasern oder Karbonfasern, verstärkt wird.

9. Verfahren nach einem der Ansprüche 1 bis 8,
**dadurch gekennzeichnet, dass**
die schmalen Stege (4) sowohl eine formgebende als auch eine abdichtende Funktion besitzen.

10. Verfahren nach einem der Ansprüche 1 bis 9,
**dadurch gekennzeichnet, dass**
das Beschneiden des Randes der Dekorfolie (2) mit Hilfe eines mechanischen Werkzeugs erfolgt.

11. Verfahren nach einem der Ansprüche 1 bis 9,
**dadurch gekennzeichnet, dass**
das Beschneiden des Randes der Dekorfolie (2) mit Hilfe eines Laser-Strahls erfolgt.

12. Vorrichtung zur Herstellung eines unterschiedliche Dekorbereiche aufweisenden Formteils mit
einem aus einer Matrize (3) und einem Kern bestehenden, durch schmale Stege (4) voneinander getrennte Teilkavitäten aufweisenden Formwerkzeug (1), wobei
mindestens ein Bereich der Matrize (3) einer Teilkavität als Schieber (8) ausgebildet ist und die Vorrichtung mindestens einen, mit dem Formwerkzeug kombinierten Niederhalter (6) sowie ein ebenfalls mit dem Formwerkzeug kombiniertes Schneidwerkzeug (9) aus der Gruppe mechanische Schneidemittel oder Laser umfasst,
**dadurch gekennzeichnet, dass**
- die Stege (4) zur Ausbildung und Abdichtung unterschiedlicher Teilkavitäten auf der Matrize (3) ausgebildet sind, ohne dass sie Bestandteil des Schiebers (8) sind,
- der Schieber (8) zum freien Aufspannen einer nicht hinterformten Dekorfolie aus der Werkzeugoberfläche herausschiebbar ist, und
- der Niederhalter (6) zur Fixierung eines hinterformten Bereichs des herzustellenden Formteils auf der Matrizenoberfläche einsetzbar ist.

13. Vorrichtung nach Anspruch 12,
**dadurch gekennzeichnet, dass**
der gesamte Bereich der Matrize einer Teilkavität als Schieber (8) ausgebildet ist.

14. Vorrichtung nach Anspruch 12 oder 13,
**dadurch gekennzeichnet, dass**
mindestens ein weiterer Niederhalter (7) für den Randbereich des Schiebers (8) vorgesehen ist.

15. Vorrichtung nach einem der Ansprüche 12 bis 14,
**dadurch gekennzeichnet, dass**
das Schneidwerkzeug (9) für den Eingriff im Randbereich des ersten Dekors (1) eingerichtet ist.

## Claims

1. Method for manufacturing a moulded part with different decorative areas, comprising the steps:
a) introducing a first decorative film (2) into a mould plate (3) of a mould composed of a core and a mould plate (3) and comprising a plurality of sub-cavities separated from one another by narrow webs (4);
b) forming a first decorative area (1) by back-moulding the first decorative film (2) in the region of at least one first sub-cavity of the mould with a support (5) made from thermoplastic, wherein the decorative film (2) remains free in the region of at least one further, adjacent sub-cavity; **characterised by** the steps
c) opening the mould and removing from the semi-finished product thus produced the at least one section of the decorative film (2) that has not been back-moulded;
d) forming a second decorative area at the site of the at least one removed section, wherein
in method step c)
i) the back-moulded section (1) of the first decorative film (2) is fixed to the surface of the mould plate (3) by a holding-down device (6) after the mould has been opened,
ii) the section of the first decorative film (2) that has not been back-moulded is pushed out of the plane of the mould plate surface by means of at least one pushing element (8) arranged in the region of the second cavity between the narrow webs (4) delimiting the cavity in the region of the mould plate (3), wherein the decorative film (2) in the region to be cut is tensioned between the fixed back-moulded first decorative area (1) and the edge of the pushing element (8), and
iii) the decorative film (2) is cut at the edge of the back-moulded first decorative area (1) and then is removed from the mould.

2. Method according to claim 1, **characterised in that** the section of the first decorative film (2) that has not been back-moulded is additionally fixed in the edge region of the pushing element (8) by means of a further holding-down device (7).

3. Method according to claim 1 or 2, **characterised in that** the second decorative area is formed by direct creation of a decoration on the surface of the support (5) by the surface of the mould.

4. Method according to claim 1 or 2, **characterised in that**, after the section of the first decorative film (2) has been removed, a second decorative film is introduced in its place and is then back-moulded.

5. Method according to one of claims 1 to 4, **characterised in that** the back-moulding takes place by back-injection or back-foaming.

6. Method according to one of claims 1 to 5, **characterised in that** fabrics, decorative materials, plastic films, carpetmaking materials, leather and imitation leather are used as the decorative film (2).

7. Method according to one of claims 1 to 6, **characterised in that** propylene (PP), polyethylene (PE), polyurethane (PU), polyamide (PA), polycarbonate (PC), acrylonitrile-butadiene-styrene (ABS) or acrylonitrile-butadiene-styrene/polycarbonate copolymer (ABS-PC) is used as the thermoplastic.

8. Method according to claim 7, **characterised in that** the thermoplastic is reinforced with fibres, such as e.g. glass fibres, natural fibres or carbon fibres.

9. Method according to one of claims 1 to 8, **characterised in that** the narrow webs (4) have both a shaping and a sealing function.

10. Method according to one of claims 1 to 9, **characterised in that** the cutting of the edge of the decorative film (2) takes place by means of a mechanical tool.

11. Method according to one of claims 1 to 9, **characterised in that** the cutting of the edge of the decorative film (2) takes place by means of a laser beam.

12. Device for manufacturing a moulded part having different decorative areas using
a mould (1) consisting of a mould plate (3) and a core and comprising sub-cavities separated from one another by narrow webs (4), wherein
at least one region of the mould plate (3) of one sub-cavity is designed as a pushing element (8) and the device comprises at least one holding-down device (6) combined with the mould and a cutting tool (9) likewise combined with the mould and selected from the group comprising mechanical cutting means or lasers,
**characterised in that**
- the webs (4) are designed to form and seal off different sub-cavities on the mould plate (3), without being part of the pushing element (8),
- the pushing element (8) can be pushed out of the mould surface in order to freely tension a decorative film that has not been back-moulded, and
- the holding-down device (6) can be used to fix to the mould plate surface a back-moulded region of the moulded part to be produced.

13. Device according to claim 12, **characterised in that** the entire area of the mould plate of one sub-cavity is designed as a pushing element (8).

14. Device according to claim 12 or 13, **characterised in that** at least one further holding-down device (7) is provided for the edge region of the pushing element (8).

15. Device according to one of claims 12 to 14, **characterised in that** the cutting tool (9) is designed to act in the edge region of the first decoration (1).

## Revendications

1. Procédé de réalisation d'une pièce moulée ayant différentes zones de décoration comprenant les étapes suivantes :
a) mise en place d'un premier film de décoration (2) dans une matrice (3) d'un outil de moulage composé d'un noyau et d'une matrice (3) avec plusieurs parties de cavité séparées par d'étroites entretoises (4),
b) réalisation d'une première zone de décoration (1) par moulage par l'arrière du premier film de décoration (2) dans la zone d'au moins une première cavité partielle de l'outil de moulage avec un support (5) en matière thermoplastique, le film de décoration (2) restant libre dans au moins une autre cavité partielle voisine,
procédé **caractérisé par** les étapes suivantes :
c) ouverture de l'outil et enlèvement d'au moins la partie du film de décoration (2) non moulée par l'arrière pour l'enlever du produit semi-fini ainsi réalisé,
d) réaliser une seconde zone de décoration à l'endroit au moins de la partie enlevée,
et dans l'étape de procédé c)
i) on fixe la partie (1) moulée par l'arrière du premier film de décoration (2) après ouverture de l'outil avec un serre-flan (6) appliqué sur la surface supérieure de la matrice (3),
ii) on expulse la partie non moulée par l'arrière du premier film de décoration (2) à l'aide d'au moins un poussoir (8) qui se trouve dans la zone de la seconde cavité entre les entretoises étroites (4) délimitant la cavité dans la zone de la matrice (3), hors du plan de la surface supérieure de la matrice, le film de décoration (2) étant tendu dans la zone à découper entre la première zone de décoration (1), moulée par l'arrière, fixée et le bord du poussoir (8), et
iii) on découpe le film de décoration (2) au bord de la première zone de décoration (1) moulée par l'arrière et ensuite on l'enlève de l'outil.

2. Procédé selon la revendication 1,
**caractérisé en ce qu'**
on fixe la partie non moulée par l'arrière du première film de décoration (2) à l'aide d'un autre serre-flan (7) en plus dans la zone du bord du poussoir (8).

3. Procédé selon la revendication 1 ou 2,
**caractérisé en ce qu'**
on réalise la seconde zone de décoration par copie directe d'un décor sur la surface du support (5) par la surface supérieure de l'outil de moulage.

4. Procédé selon la revendication 1 ou 2,
**caractérisé en ce qu'**
après avoir enlevé la partie du premier film de décoration (2), on place à son endroit, un second film de décoration et ensuite on moule par l'arrière.

5. Procédé selon l'une des revendications 1 à 4,
**caractérisé en ce que**
le moulage par l'arrière se fait par injection par l'arrière ou par expansion par l'arrière.

6. Procédé selon l'une des revendications 1 à 5,
**caractérisé en ce que**
comme film de décoration (2), on utilise des tissus, des tissus décoratifs, des films de matière plastique, des tapis, du cuir ou des imitations de cuir.

7. Procédé selon l'une des revendications 1 à 6,
**caractérisé en ce que**
la matière thermoplastique est choisie dans le groupe polypropylène (PP), polyéthylène (PE), polyuréthane (PU), polyamide (PA), polycarbonate (PC), acrylnitril-butadiène-styrène (ABS) et copolymérisat (ABS-PC) d'acrylnitril-butadiène-styrène/polycarbonate.

8. Procédé selon la revendication 7,
**caractérisé en ce qu'**
on renforce la matière thermoplastique avec des fibres par exemple des fibres de verre, des fibres naturelles ou des fibres de carbone.

9. Procédé selon l'une des revendications 1 à 8,
**caractérisé en ce que**
les entretoises étroites (4) ont à la fois une fonction de moule et une fonction d'étanchéité.

10. Procédé selon l'une des revendications 1 à 9,
**caractérisé en ce que**
la découpe du bord du film de décoration (2) se fait à l'aide d'un outil mécanique.

11. Procédé selon l'une des revendications 1 à 9,
**caractérisé en ce que**
la découpe du bord du film de décoration (2) se fait par un faisceau laser.

12. Dispositif de réalisation d'une pièce moulée ayant différentes zones de décoration comportant un outil de moulage (1) formé d'une matrice (3) et d'un noyau avec des cavités partielles séparées les unes des autres par d'étroites entretoises (4),
dispositif dans lequel
au moins une zone de la matrice (3) a une cavité partielle réalisée sous la forme d'un poussoir (8) et le dispositif comporte au moins un serre-flan (6) combiné à l'outil de moulage ainsi qu'un outil de coupe (9) également combiné à l'outil de moulage et choisi dans le groupe des moyens mécaniques de coupe ou des lasers,
dispositif **caractérisé en ce que**
- les entretoises (4) sont réalisées pour former et rendre étanche les différentes cavités partielles de la matrice (3) sans faire partie du poussoir (8),
- le poussoir (8) peut être dégagé par coulissement de la surface supérieure de l'outil pour serrer librement un film de décoration non moulé par l'arrière, et
- le serre-flan (6) est utilisé pour fixer sur la surface de la matrice une zone moulée par l'arrière de la pièce moulée à fabriquer.

13. Dispositif selon la revendication 12,
**caractérisé en ce que**
l'ensemble de la zone de la matrice d'une cavité partielle, est réalisé sous la forme d'un poussoir (8).

14. Dispositif selon la revendication 12 ou 13,
**caractérisé par**
au moins un autre serre-flan (7) pour la zone du bord du poussoir (8).

15. Dispositif selon l'une des revendications 12 à 14,
**caractérisé en ce que**
l'outil de coupe (9) est conçu pour prendre dans la zone du bord du premier décor (1).
